(19) Europäisches Patentamt
European Patent Office
Office européen des brevets

(11) **EP 4 358 363 B1**

(12) **EUROPEAN PATENT SPECIFICATION**

(45) Date of publication and mention
of the grant of the patent:
**22.10.2025 Bulletin 2025/43**

(21) Application number: **23833561.6**

(22) Date of filing: **14.02.2023**

(51) International Patent Classification (IPC):
*H02J 50/20* (2016.01)  *H02J 50/80* (2016.01)
*H02J 7/00* (2006.01)  *H02J 50/12* (2016.01)

(52) Cooperative Patent Classification (CPC):
**H02J 7/00032; H02J 7/00; H02J 7/00034;
H02J 7/00302; H02J 7/00308; H02J 7/0047;
H02J 7/00712; H02J 7/007182; H02J 50/12;
H02J 50/20; H02J 50/80;** Y02T 10/70

(86) International application number:
**PCT/CN2023/075940**

(87) International publication number:
**WO 2024/051086 (14.03.2024 Gazette 2024/11)**

(54) **ELECTRIC POWER RECEIVING DEVICE, ELECTRIC POWER SENDING DEVICE, AND ELECTRIC POWER TRANSMISSION METHOD**

STROMEMPFANGSVORRICHTUNG, STROMSENDEVORRICHTUNG UND STROMÜBERTRAGUNGSVERFAHREN

DISPOSITIF DE RÉCEPTION D'ÉNERGIE ÉLECTRIQUE, DISPOSITIF D'ENVOI D'ÉNERGIE ÉLECTRIQUE ET PROCÉDÉ DE TRANSMISSION D'ÉNERGIE ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.09.2022 CN 202211081847**

(43) Date of publication of application:
**24.04.2024 Bulletin 2024/17**

(73) Proprietor: **Honor Device Co., Ltd.
Shenzhen, Guangdong 518040 (CN)**

(72) Inventors:
• **LIU, Dongping**
  **Shenzhen, Guangdong 518040 (CN)**
• **JIANG, Cheng**
  **Shenzhen, Guangdong 518040 (CN)**

(74) Representative: **Maiwald GmbH
Engineering
Elisenhof
Elisenstrasse 3
80335 München (DE)**

(56) References cited:
CN-A- 109 462 339    CN-A- 112 886 816
CN-A- 113 824 193    CN-A- 115 173 584
JP-A- 2009 038 924   US-A1- 2015 171 820
US-A1- 2016 352 139  US-A1- 2021 391 754

## Description

### TECHNICAL FIELD

The present invention relates to a power receiving apparatus, a power transmission apparatus, and a power transmission method.

### BACKGROUND

US2015/171820A1 describes a non-contact power transmission device equipped with a ground-side device and a vehicle-side device. It is described that the ground-side device has a primary-side coil to which alternating-current power is input. It is described that the vehicle-side device includes a secondary-side coil, a battery, a secondary-side matching device, and a charging device. It is described that the secondary-side coil receives alternating-current power from the primary-side coil in a non-contact manner. It is described that the secondary-side matching device is provided between the secondary-side coil and the battery, and has a predetermined fixed inductance and fixed capacitance. It is described that the charging device has a switching element that performs a switching operation with a prescribed cycle. It is described that the charging device adjusts the duty ratio of the switching operation in accordance with the impedance of a load.

US2016/352139A1 describes a power-transmitting device transmits AC power generated in an inverter circuit to a power receiving device in a wireless manner by magnetically coupling a power-transmitting coil to a power-receiving coil of the power receiving device. It is described that the power-transmitting device is provided with a power transmission controller which controls the aforementioned inverter circuit to change the AC power in accordance with information relating to the state of power transmission to a load connected to the power-receiving device.

With the development of wireless power transmission technologies, an increasing number of electronic devices are wirelessly charged by using wireless power transmission apparatuses. For example, the electronic devices may be mobile phones, wearable devices, styluses, and the like. A wireless power transmission apparatus generally includes a power sending apparatus and a power receiving apparatus, and a wireless power transmission process is achieved through electromagnetic field coupling between a transmit antenna of the power sending apparatus and a receive antenna of the power receiving apparatus.

Since battery impedance changes in a charging process of a battery, load impedance of the power receiving apparatus changes, and the entire power transmission apparatus cannot transmit with optimal transmission efficiency. In conventional solutions, constant-frequency voltage regulation or constant-voltage frequency regulation is usually used to deal with changes in the load impedance of the power receiving apparatus, but this method sacrifices part of the charging efficiency.

However, due to limitations of the operating frequency band of wireless power transmission, some frequency bands have narrow operating bandwidths, and the load impedance cannot be matched to the optimal impedance by regulating the frequency band. Further, it is impossible to achieve optimal efficiency of the power transmission apparatus in the entire transmission state.

### SUMMARY

Embodiments of this application provide a power receiving apparatus, a power sending apparatus, and a power transmission method, to resolve the problem that when some frequency bands have narrow operating bandwidths, a power transmission apparatus cannot achieve optimal efficiency in the entire transmission state because load impedance of the power receiving apparatus has a broad change range, and an optimal value of the load impedance cannot be achieved through frequency regulation, so that the load impedance of the power receiving apparatus can be controlled to the optimal value in real time, to optimize the efficiency of the power transmission apparatus in the entire transmission state.

The invention and its scope of protection is defined by the appended independent claims. Embodiments of the invention are defined by the appended dependent claims. The following aspects and implementations of the summary provide examples of how technical subject matters can be combined.

According to a first aspect, an embodiment of this application shows a power receiving apparatus, including: a battery and protection circuit module, a first microcontroller module, and an impedance transformation module. The battery and protection circuit module is configured to obtain battery impedance. The first microcontroller module is configured to send a driving signal to the impedance transformation module based on a preset optimal value of input impedance of the impedance transformation module and the battery impedance, to adjust a duty cycle of a driving signal in the impedance transformation module, to enable the impedance transformation module to output a target voltage. The duty cycle is a ratio of high-level duration of the driving signal in one cycle to one cycle. When the impedance transformation module outputs the target voltage, the input impedance is at the optimal value of the input impedance.

In the technical solution shown in this embodiment of this application, the power receiving apparatus can control load impedance of the power receiving apparatus to an optimal value in real time through the impedance transformation module, to optimize the efficiency of a power transmission apparatus in the entire transmission state.

In some embodiments, the impedance transformation module is a direct-current impedance converter, and the direct-current impedance converter includes at least one of a single-ended primary inductive converter, a direct-current buck-boost converter, and a direct-current boost-buck converter. In the manner of this embodiment, the power receiving apparatus may select a suitable type of direct-current impedance converter to adjust the load impedance.

In some embodiments, the battery and protection circuit module is further configured to receive the target voltage output by the impedance transformation module, and turn on at least one protection circuit if the target voltage is greater than a rated voltage of the battery. The at least one protection circuit includes at least one transient voltage diode. In the manner of this embodiment, when the target voltage is greater than the maximum voltage of the battery, the battery and protection circuit module protects the battery through the protection circuit to avoid damage to the battery due to overcharging.

According to the invention, the first microcontroller module is further configured to detect a charge state of the battery and protection circuit module, to determine whether charging of the battery and protection circuit module is completed. The first microcontroller module is further configured to perform voltage detection on the battery and protection circuit module once every delay threshold if the charging of the battery and protection circuit module is not completed, to obtain a detected battery voltage. The battery and protection circuit module is further configured to stop, if the charging of the battery and protection circuit module is completed, receiving the target voltage output by the impedance transformation module. In the manner of this embodiment, the first microcontroller module can detect the charge state of the battery and protection circuit module in real time to determine whether the charging is completed.

According to the invention, a first communication module is further included. The first microcontroller module is further configured to determine whether the detected battery voltage is equal to the maximum voltage of the battery. The first microcontroller module is further configured to determine detected battery impedance based on the detected battery voltage if the detected battery voltage is equal to the maximum voltage of the battery; and perform next detection to determine whether the charging of the battery and protection circuit module is completed. The first communication module is configured to send the detected battery voltage and the detected battery impedance to a power sending apparatus. In the manner of this embodiment, the first communication module may send the detected battery voltage and the detected battery impedance to the power sending apparatus in real time, to enable the power sending apparatus to adjust target power output by the power sending apparatus based on the values that are sent.

In some embodiments, the first microcontroller module is further configured to determine, if the detected battery voltage is less than the maximum voltage of the battery, whether the detected battery voltage falls within a receive threshold range. The receive threshold represents a deviation degree of the target voltage. The first microcontroller module is further configured to detect the charge state of the battery and protection circuit module a next time if the detected battery voltage falls within the receive threshold range, to determine whether the charging of the battery and protection circuit module is completed. The first microcontroller module is further configured to determine the detected battery impedance based on the detected battery voltage if the detected battery voltage does not fall within the receive threshold range, and detect the charge state of the battery and protection circuit module a next time. In the manner of this embodiment, the first microcontroller module may determine whether the battery voltage falls within a proper deviation range by determining whether the detected battery voltage falls within the receive threshold.

According to a second aspect, which is not separately claimed, this application further shows a power sending apparatus, including: a second communication module, a second microcontroller module, and a power amplifier module. The second communication module is configured to receive a battery voltage and battery impedance sent by a power receiving apparatus. The second microcontroller module is configured to send a control signal to the power amplifier module based on the battery voltage and the battery impedance, to control, through the control signal, the power amplifier module to output target power, where the target power is for enabling input impedance of a direct-current impedance converter in the power receiving apparatus to reach an optimal value of the input impedance. In the manner of this embodiment, the power sending apparatus can send the control signal to the power amplifier module based on the received battery voltage and the received battery impedance to adjust the target power output by the power amplifier module, thereby ensuring that the power transmission apparatus has optimal efficiency in the entire transmission state.

According to a third aspect, an embodiment of this application shows a power transmission apparatus. The power transmission apparatus includes the power receiving apparatus in the first aspect and various implementations of the first aspect and the power sending apparatus in the second aspect and various implementations of the second aspect. An operating frequency band used by the power receiving apparatus and the power sending apparatus to transmit radio frequency energy includes 6.78 MHz and/or 13.56 MHz. In the manner of this embodiment, the power transmission apparatus may ensure optimal efficiency of the transmission state when the operating frequency band is 6.78 MHz and/or 13.56 MHz.

According to a fourth aspect, this application further shows a power transmission method applied to a power receiving apparatus. The method includes: obtaining battery impedance; and sending a driving signal to a direct-current impedance converter based on a preset optimal value of input impedance of the direct-current impedance converter and the battery impedance, to adjust a duty cycle of a driving signal in the direct-current impedance converter, to enable the direct-current impedance converter to output a target voltage. The duty cycle is a ratio of high-level duration of the driving signal in one cycle to one cycle. When the direct-current impedance converter outputs the target voltage, the input impedance is at the optimal value of the input impedance. In the manner of this embodiment, the power receiving apparatus can control load impedance of the power receiving apparatus to an optimal value in real time through the direct-current impedance converter, to optimize the efficiency of a power transmission apparatus in the entire transmission state.

In some embodiments, the method further includes: receiving the target voltage output by the direct-current impedance converter; and turning on at least one protection circuit if the target voltage is greater than a rated voltage of the battery. The at least one protection circuit includes at least one transient voltage diode. In the manner of this embodiment, when the target voltage is greater than the rated voltage of the battery, the power receiving apparatus may protect the battery through the protection circuit to avoid damage to the battery due to overcharging.

According to the invention, the method further includes: detecting a charge state of the power receiving apparatus, to determine whether charging of the power receiving apparatus is completed; performing voltage detection on the power receiving apparatus once every delay threshold if the charging of the power receiving apparatus is not completed, to obtain a detected battery voltage; and stopping, if the charging of the power receiving apparatus is completed, receiving the target voltage output by the direct-current impedance converter. In the manner of this embodiment, the power receiving apparatus can detect the charge state of the power receiving apparatus in real time to determine whether the charging is completed.

According to the invention, the method further includes: determining whether the detected battery voltage is equal to the maximum voltage of the battery; determining detected battery impedance based on the detected battery voltage if the detected battery voltage is equal to the maximum voltage of the battery; performing next detection to determine whether the charging of the power receiving apparatus is completed; and sending the detected battery voltage and the detected battery impedance to a power sending apparatus. In the manner of this embodiment, the power receiving apparatus may send the detected battery voltage and the detected battery impedance to the power sending apparatus in real time, to enable the power sending apparatus to adjust target power output by the power sending apparatus based on the values that are sent.

In some embodiments, the method further includes: determining, if the detected battery voltage is less than the maximum voltage of the battery, whether the detected battery voltage falls within a receive threshold range, where the receive threshold represents a deviation degree of the target voltage; detecting the charge state of the power receiving apparatus a next time if the detected battery voltage falls within the receive threshold range, to determine whether the charging of the power receiving apparatus is completed; and determining the detected battery impedance based on the detected battery voltage if the detected battery voltage does not fall within the receive threshold range, and detecting the charge state of the power receiving apparatus a next time. In the manner of this embodiment, the power receiving apparatus may determine whether the battery voltage falls within a proper deviation range by determining whether the detected battery voltage falls within the receive threshold.

According to a fifth aspect, which is not claimed, this application further shows a power transmission method, applied to a power sending apparatus. The method includes: receiving a battery voltage and battery impedance sent by a power receiving apparatus; and sending a control signal based on the battery voltage and the battery impedance, to control, through the control signal, the power sending apparatus to output target power. The target power is for enabling input impedance of a direct-current impedance converter in the power receiving apparatus to reach an optimal value of the input impedance. In the manner of this embodiment, the power sending apparatus can send the control signal based on the received battery voltage and the received battery impedance to adjust the target power output by the power sending apparatus, thereby ensuring that load impedance of the power receiving apparatus is controlled at an optimal value in real time.

## BRIEF DESCRIPTION OF DRAWINGS

FIG. 1 is a simplified schematic diagram of a structure of a power transmission apparatus according to an embodiment of this application;

FIG. 2 is a schematic diagram of a wireless power transmission process according to an embodiment of this application;

FIG. 3 is a schematic diagram of an improved structure of a receiver end impedance transformation module according to an embodiment of this application;

FIG 4 is a schematic diagram of a structure of a power transmission apparatus 100 according to an embodiment of this application;

FIG. 5 is a schematic diagram of a circuit of a single-ended primary inductive converter according to an embodiment of this application;

FIG. 6 is a schematic diagram of a circuit of a direct-current buck-boost converter according to an embodiment of this application;

FIG. 7 is a schematic diagram of a circuit of a direct-current boost-buck converter according to an embodiment of this application;

FIG 8 is a partial simplified schematic diagram of a circuit of a power transmission apparatus 100 according to an embodiment of this application; and

FIG. 9 is a flowchart of a power transmission method according to an embodiment of this application.

## DESCRIPTION OF EMBODIMENTS

The following clearly describes technical solutions in embodiments of this application with reference to the accompanying drawings in embodiments of this application.

In the descriptions of this application, "/" means "or" unless otherwise specified. For example, A/B may represent A or B. "And/or" used herein describes only an association relationship for describing associated objects and represents that three relationships may exist. For example, A and/or B may represent the following three cases: Only A exists, both A and B exist, and only B exists. In addition, "at least one" means one or more and "a plurality of" means two or more. The terms, such as "first" and "second", do not limit a quantity or an execution sequence, and the terms, such as "first" and "second", do not indicate a definite difference.

It should be noted that in this application, the terms "example" or "for example" is used to represent giving an example, an illustration, or a description. Any embodiment or design solution described by using "example" or "for example" in this application should not be explained as being more preferred or having more advantages than another embodiment or design solution. Exactly, use of the term, such as "example" or "for example", is intended to present a related concept in a specific manner.

Wireless power transfer (Wireless power transfer, WPT) refers to a power supply-to-load near-field power transfer technology implemented using mechanisms such as magnetic induction, magnetic resonance, and capacitive coupling, to implement wireless power transfer between a power supply and a load, to further charge an electronic device wirelessly.

A type of the electronic device includes, but is not limited to, an electronic device such as a mobile phone, a tablet computer, a notebook computer, a large-screen device (such as a smart TV or a smart screen), a personal computer (personal computer, PC), a handheld computer, a netbook, a personal digital assistant (personal digital assistant, PDA), a wearable electronic device, an in-vehicle device, or a virtual reality device. The electronic device may alternatively be an electronic product such as a wirelessly charged electric vehicle, a wirelessly charged household appliance, and an unmanned aerial vehicle.

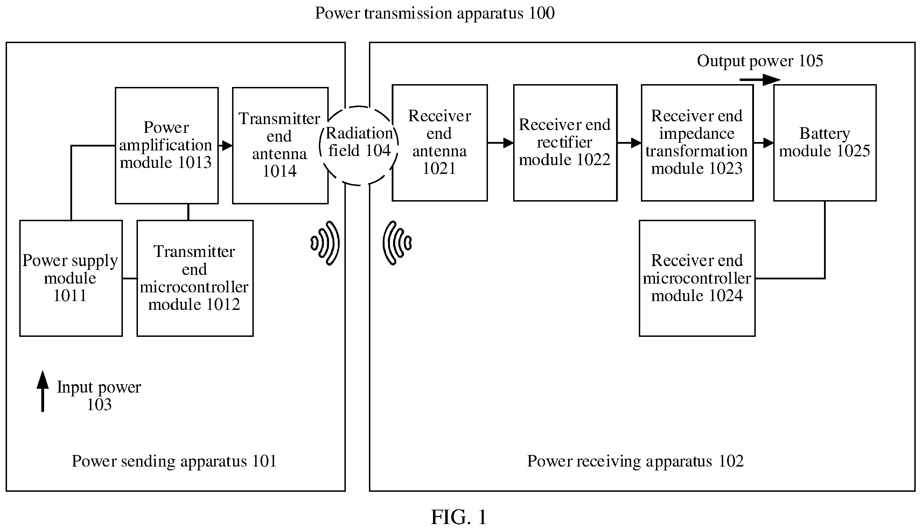

FIG. 1 is a simplified schematic diagram of a structure of a power transmission apparatus. As shown in FIG. 1, a power transmission apparatus 100 includes a power sending apparatus (PTU) 101 and a power receiving apparatus (PRU) 102. The power sending apparatus 101 receives input power 103 to generate, through the input power 103, a radiation field 104 for providing energy transfer. The power receiving apparatus 102 is coupled to the radiation field 104 to generate output power 105 for the power receiving apparatus 102 to store or consume.

Further, as shown in FIG. 1, the power sending apparatus 101 may include a power supply module 1011, a transmitter end microcontroller module (Microcontroller Unit, MCU) 1012, a power amplification module 1013, and a transmitter end antenna 1014.

The power supply module 1011 may be configured to receive the input power 103 and input the input power 103 to the power amplification module 1013.

The power amplification module 1013 may be configured to convert direct-current energy of the input power 103 into radio frequency energy.

In this process, the transmitter end microcontroller module 1012 may be configured to adjust an operating frequency of the radio frequency energy converted by the power amplification module 1013, to enable the power amplification module 1013 to generate an operating frequency of a required frequency band. The power amplification module 1013 may be further configured to send the radio frequency energy to the transmitter end antenna 1014 after converting the direct-current energy into the radio frequency energy.

The transmitter end antenna 1014 may be configured to transmit the radio frequency energy to the power receiving apparatus 102.

Correspondingly, the power receiving apparatus 102 includes a receiver end antenna 1021, a receiver end rectifier module 1022, a receiver end impedance transformation module 1023, a receiver end microcontroller module 1024, and a battery module 1025.

When the transmitter end antenna 1014 sends the radio frequency energy to the power receiving apparatus 102, most of the energy in the near field of the transmitter end antenna 1014 can be coupled into the receiver end antenna 1021, so that the transmitter end antenna 1015 and the receiver end antenna 1021 form a near-field coupling mode.

The receiver end antenna 1021 may be configured to send the received radio frequency energy to the receiver end rectifier module 1022 after receiving the radio frequency energy.

The receiver end rectifier module 1022 may be configured to convert the radio frequency energy into direct-current energy, and send the direct-current energy to the receiver end impedance transformation module 1023.

The receiver end impedance transformation module 1023 may be configured to receive a control signal sent by the receiver end microcontroller module 1024, adjust impedance corresponding to the direct-current energy based on the control signal, and generate the output power 105 for the battery module 1025 to store or consume.

It should be noted herein that the structure of the power transmission apparatus 100 shown in FIG. 1 is only for illustrative descriptions. In an actual application, based on this structure, a module may be added to or removed from the power transmission apparatus 100 to implement a required function.

To ensure that the loss of radio frequency energy transmitted between the power sending apparatus 101 and the power receiving apparatus 102 is minimal, it is usually necessary to adjust source impedance of the power sending apparatus 101 and/or adjust load impedance of the power receiving apparatus 102, so that both the source impedance and the load impedance are matched to optimal impedance, to maximize the transmission efficiency of the power transmission apparatus 100 in the entire transmission state.

In a process of performing wireless power transmission between the power sending apparatus 101 and the power receiving apparatus 102, the total efficiency of the power transmission apparatus 100 may be defined as a product of efficiency of all modules in the power sending apparatus 101 and the power receiving apparatus 102, which may be specifically the following formula (1):

$$\eta_{\text{total efficiency of power transmission}} = \eta_{1013} \times \eta_{1014} \times \eta_{1021} \times \eta_{1022} \times \eta_{1023} \times \eta_{1025}, \text{ where (1)}$$

$\eta_{1013}$ is the efficiency of the power amplification module 1013, $\eta_{1014}$ is the efficiency of the transmitter end antenna 1014, $\eta_{1021}$ is the efficiency of the receiver end antenna 1021, $\eta_{1022}$ is the efficiency of the receiver end rectifier module 1022, $\eta_{1023}$ is the efficiency of the receiver end impedance transformation module 1023, and $\eta_{1025}$ is the efficiency of the battery module 1025.

To improve the total efficiency of the power transmission apparatus 100 in the entire transmission state, all circuits in the power transmission apparatus 100 are usually designed individually and then combined together, and all the circuits are designed to operate at the highest efficiency. However, it is unavoidable that due to the presence of non-ideal capacitors and non-ideal inductors in the circuits, additional power losses may be introduced to both the power sending apparatus 101 and the power receiving apparatus 102.

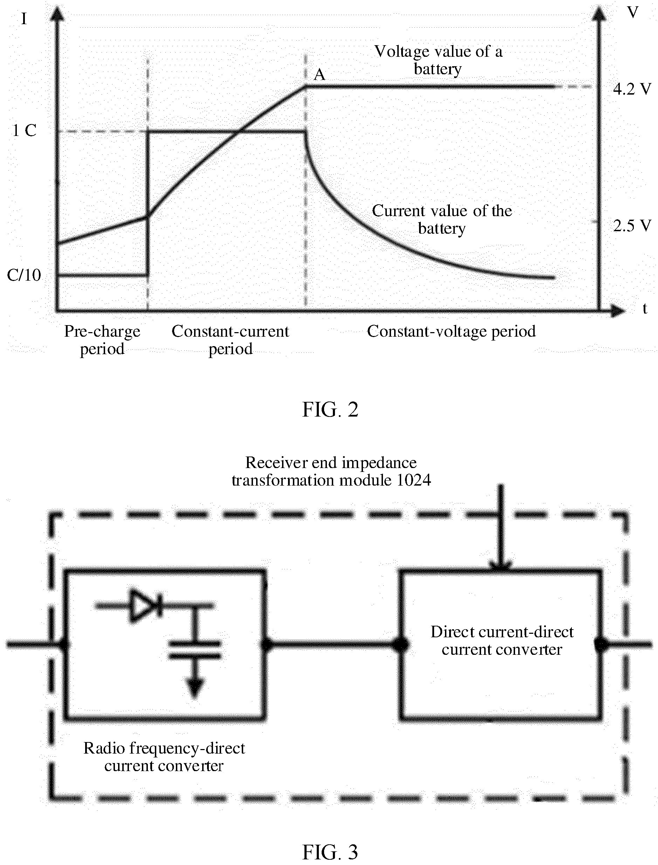

FIG. 2 is a schematic diagram of a wireless power transmission process. As shown in FIG. 2, a conventional wireless power transmission process is divided into a pre-charge period, a constant-current period, and a constant-voltage period. During the pre-charge period, the current intensity is kept at C/10, and at this time, the voltage in the battery module 1025 gradually increases to 2.5 V. During the constant-current period, the current intensity is maintained at 1 C, during which the voltage in the battery module 1025 gradually increases from 2.5 V to 4.2 V. During the constant-voltage period, the voltage intensity is maintained at 4.2 V, during which the current intensity gradually decreases from 1 C to C/10 and then remains stable. That is to say, due to a battery characteristic in the battery module 1025, when the output voltage received by the battery module 1025 is a constant voltage, constant current intensity cannot be maintained, and battery impedance changes as a charge state changes, causing the load impedance of the power receiving apparatus 102 to change.

It should be noted herein that, using the battery module 1025 being a lithium battery as an example, inherent resistance of the lithium battery includes resistance of an electrode material, an electrolyte, and a diaphragm, and other internal resistance of a material part. During long-term charge and discharge processes of a lithium battery, a loss of an internal electrolyte of the lithium battery and reduction of activity of various chemical substances gradually increase the battery impedance. During a single charge or discharge process of a lithium battery, battery impedance of the lithium battery is related to a change in temperature and a change in polarization internal resistance. The battery characteristic described in this application refers to a characteristic that a battery impedance changes as a charge state changes during a single charge or discharge process.

The power sending apparatus 101 and the power receiving apparatus 102 may introduce additional power losses. In addition, because when the battery module 1025 receives the output power 105, the characteristic of the battery impedance that changes as the charge state changes may cause the total efficiency to change, the power sending apparatus 101 and the power receiving apparatus 102 may not work with designed performance in actual operation. During circuit design, it is necessary to consider a design manner of maximizing the transmission efficiency of the power transmission apparatus 100 in different usage scenarios.

After a design manner of the circuit in a specific scenario is determined, the inherent efficiency of some modules of the power transmission apparatus 100 is maintained. In the foregoing formula (1), the efficiency $\eta_{1022}$ of the receiver end rectifier module 1022 and the efficiency $\eta_{1023}$ of the receiver end impedance transformation module 1023 are both inherent efficiency and do not change as the load impedance of the power receiving apparatus 102 changes. Only the efficiency $\eta_{1013}$ of the power amplification module 1013, the efficiency $\eta_{1014}$ of the transmitter end antenna 1014, and the efficiency $\eta_{1021}$ of the receiver end antenna 1021 change as the load impedance changes. Therefore, in the improvement solution of the conventional solution, the module that can change the efficiency is usually improved.

To enable the power transmission apparatus 100 to transmit maximum power, the power transmission apparatus 100 may configure circuits in the entire apparatus based on the principle of optimizing the output power efficiency of the power sending apparatus. The source impedance at one end of the power sending apparatus 101 is kept at a constant value, and frequency regulation is performed through the power amplification module 1013 to match the load impedance of the power receiving apparatus 102 to an optimal impedance.

It should be noted herein that according to the "Interim Provisions on Radio Management of Wireless Charging (Power Transmission) Equipment", current operating frequency bands of wireless charging can only be used in three frequency bands: 100 to 148.5 kHz, 6765 to 6795 kHz, and 13553 to 13567 kHz. Due to frequency band limitations, the load impedance of the power receiving apparatus 102 cannot be matched to optimal impedance through frequency regulation in some frequency bands. Using the operating frequency bands of 6.78 MHz and 13.56 MHz as an example, bandwidths of the frequency bands are narrow. When the load impedance of the power receiving apparatus 102 changes in a large range, even if the bandwidths of the frequency bands are adjusted to maximum bandwidths, the load impedance of the power receiving apparatus 102 cannot be matched to the optimal impedance in the frequency bands through frequency regulation. Consequently, the transmission efficiency of the entire power transmission apparatus 100 cannot be maximized.

FIG. 3 is a schematic diagram of an improved structure of a receiver end impedance transformation module. As shown in FIG. 3, the receiver end impedance transformation module 1023 includes a radio frequency-direct current converter and a direct current-direct current converter. The radio frequency-direct current converter may be at least one of a switchable fixed capacitor, a switchable fixed inductor, and a voltage-variable capacitor, to be configured to adjust impedance transformation caused by device tolerance. The direct current-direct current converter may be at least one of a buck converter or a boost converter, to be configured to adjust direct-current impedance. In the receiver end impedance transformation module 1023 shown in FIG. 3, when the radio frequency-direct current converter is a switchable fixed capacitor or a switchable fixed inductor, there may be an excessive ohmic loss, resulting in poor practicability. However, at present, most voltage-variable capacitors are ferroelectric apparatuses, micro-electromechanical systems, and varactor diodes, resulting in poor generalizability. Such radio frequency energy transmitted based on tolerance of a regulation device cannot achieve the expected transmission efficiency. When the direct current-direct current converter is a buck converter or a boost converter, a range of impedance transformation is limited, and the load impedance in the power receiving apparatus 102 cannot be matched to the optimal impedance in real time. Consequently, the transmission efficiency of the entire power transmission apparatus 100 cannot be maximized.

Therefore, in the conventional solution, in some frequency bands, the power transmission apparatus 100 cannot control the load impedance of the power receiving apparatus 102 to an optimal value in real time, and further, cannot optimize the efficiency of the power transmission apparatus 100 in the entire transmission state.

To resolve the foregoing technical problems, an embodiment of this application provides a power transmission apparatus 100.

Structures of the power transmission apparatus 100 provided in this embodiment of this application will be described below in detail.

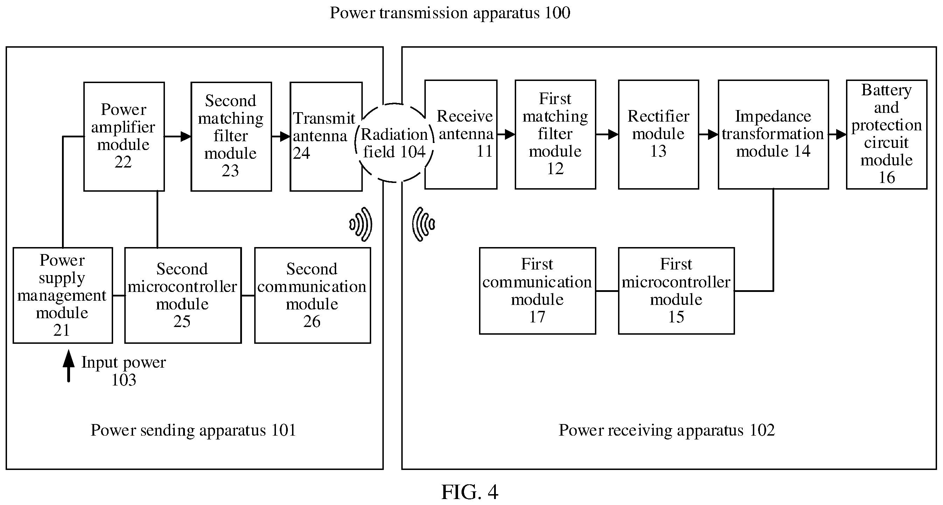

FIG. 4 provides a schematic diagram of a structure of the power transmission apparatus 100 according to an embodiment of this application.

As shown in FIG. 4, the power transmission apparatus 100 in this application includes a power sending apparatus 101 and a power receiving apparatus 102.

It should be noted that the schematic diagram of the structure shown in FIG. 4 is only for illustrative descriptions, and during actual use, replacement, addition, and removal may be performed on parts of the illustrated structure, to implement specific functions.

The power receiving apparatus 102 includes a receive antenna 11, a first matching filter module 12, a rectifier module 13, an impedance transformation module 14, a first microcontroller module 15, a battery and protection circuit module 16, and a first communication module 17.

The power sending apparatus 101 includes a power supply management module 21, a power amplifier module 22, a second matching filter module 23, a transmit antenna 24, a second microcontroller module 25, and a second communication module 26.

It should be noted herein that control logic of both the first microcontroller module 15 and the second microcontroller module 25 that are shown in this embodiment of this application is set based on the principle of optimizing the transmission efficiency of the receive antenna 11 and the transmit antenna 24. The impedance transformation module 14 performs its function based on the principle of optimizing the transmission efficiency of the receive antenna 11 and the transmit antenna 24.

In this embodiment of this application, the total efficiency of the power transmission apparatus 100 is a product of efficiency of all modules in the power sending apparatus 101 and the power receiving apparatus 102, which may be specifically the following formula (2):

$$\eta_{\text{total efficiency of power transmission}} = \eta_{11} \times \eta_{12} \times \eta_{13} \times \eta_{14} \times \eta_{15} \times \eta_{16} \times \eta_{17} \times \eta_{21} \times \eta_{22} \times \eta_{23} \times \eta_{24} \times \eta_{25} \times \eta_{26},$$

where (2)

$\eta_{11}$ is the efficiency of the receive antenna 11, $\eta_{12}$ is the efficiency of the first matching filter module 12, $\eta_{13}$ is the efficiency of the rectifier module 13, $\eta_{14}$ is the efficiency of the impedance transformation module 14, $\eta_{15}$ is the efficiency of the first microcontroller module 15, $\eta_{16}$ is the efficiency of the battery and protection circuit module 16, $\eta_{17}$ is the efficiency of the first communication module 17, $\eta_{21}$ is the efficiency of the power supply management module 21, $\eta_{22}$ is the efficiency of the power amplifier module 22, $\eta_{23}$ is the efficiency of the second matching filter module 23, $\eta_{24}$ is the efficiency of the transmit antenna 24, $\eta_{25}$ is the efficiency of the second microcontroller module 25, and $\eta_{26}$ is the efficiency of the second communication module 26.

In this embodiment of this application, because the efficiency of the first matching filter module 12, the efficiency of the rectifier module 13, the efficiency of the impedance transformation module 14, the efficiency of the first microcontroller module 15, the efficiency of the battery and protection circuit module 16, and the efficiency of the first communication module 17, the efficiency of the power supply management module 21, the efficiency of the second matching filter module 23, the efficiency of the second microcontroller module 25, and the efficiency of the second communication module 26 are constant during actual operation of the power transmission apparatus 100, only the efficiency of the power amplifier module 22, the efficiency of the transmit antenna 24, and the efficiency of the receive antenna 11 may change as the load impedance changes in the actual operation of the power transmission apparatus 100.

It should be noted herein that the total antenna efficiency (that is, a product of efficiency of the transmit antenna 24 and efficiency of the receive antenna 11) does not change after the design manner of the circuits is determined, but a change of the load impedance may cause the total antenna efficiency to change. Therefore, when the total antenna efficiency reaches an optimal value, and the load impedance reaches an optimal value, the power amplifier module 22 is designed to match the load impedance, so that the power amplifier module 22 is enabled to adjust output target power, to optimize a value of the source impedance, and further, optimize the efficiency of the power transmission apparatus 100 in the entire transmission state.

In this embodiment of this application, the power supply management module 21 may be configured to receive input power 103 and modulate the input power 103 to send the modulated input power 103 to the power amplifier module 22. The input power 103 may be alternating-current mains power or direct-current power. When the input power 103 is alternating-current mains power, the power supply management module 21 may be configured to modulate the input power 103 into direct-current energy through a full-bridge rectifier circuit, to input the modulated direct-current energy into the power amplifier module 22.

In this embodiment of this application, the power amplifier module 22 may be configured to convert the direct-current energy into radio frequency energy after receiving the direct-current energy sent by the power supply management module 21. The power amplifier module 22 includes, but is not limited to, a class E amplifier, a class D amplifier, a differential class E amplifier, and a differential class D amplifier. The power amplifier module 22 may be further configured to send the radio frequency energy to the second matching filter module 23.

In this embodiment of this application, the second matching filter module 23 includes an electromagnetic compatibility filter (EMC Filter) and an impedance matching network. Among them, the electromagnetic compatibility filter can filter out noise and high frequency harmonics generated by switching on or off a power supply. The second matching filter module 23 may be configured to filter out unnecessary operating frequencies from the radio frequency energy through the electromagnetic compatibility filter after receiving the radio frequency energy sent by the power amplifier module 22, and matches the radio frequency energy to the transmit antenna 24 through the impedance matching network.

In this embodiment of this application, after receiving the radio frequency energy matched through the impedance matching network, the transmit antenna 24 may be configured to send the radio frequency energy to the receive antenna 11. The transmit antenna 24 includes, but is not limited to, at least one of a flexible printed circuit board (Flexible Printed Circuit, FPC) antenna and a wound coil.

It should be noted here that when the transmit antenna 24 is a wound coil, the transmit antenna 24 may include at least one wound coil. A specific quantity of wound coils is not limited in this embodiment of this application. For example, the transmit antenna 24 may include three wound coils, four wound coils, or a larger quantity of wound coils. During actual operation of the transmit antenna 24, one most efficient wound coil may be selected from a plurality of wound coils to transmit the radio frequency energy, and the remaining wound coils do not work. Since the plurality of wound coils may shield interference signals in the power sending apparatus 101, the wound coil configured to send the radio frequency energy can improve the anti-interference and send the radio frequency energy at a required operating frequency.

In this embodiment of this application, the second microcontroller module 25 may control a transmission process of the power sending apparatus 101. The second microcontroller module 25 may be configured to control the power supply management module 21, to enable the power supply management module 21 to modulate the input power 103 into direct-current energy, and may be further configured to control an operating frequency of radio frequency energy converted by the power amplifier module 22, to enable the power amplifier module 22 to generate an operating frequency of a required frequency band.

In this embodiment of this application, the second communication module 26 may be configured to receive information sent by the first communication module 17, to implement communication between the power sending apparatus 101 and the power receiving apparatus 102. The second communication module 26 may implement a wireless connection to the first communication module 17 in an out-of-band communication manner such as Bluetooth (Bluetooth), wireless broadband (Wireless-Fidelity, Wi-Fi), Zigbee protocol (Zigbee), radio frequency identification (Radio Frequency Identification, RFID), a long range (Long range, Lora) wireless technology, near-field communication (Near-Field Communication, NFC).

In this embodiment of this application, when receiving the radio frequency energy sent by the transmit antenna 24, the receive antenna 11 may be configured to send the received radio frequency energy to the first matching filter module 12. The receive antenna 11 includes, but is not limited to, at least one of a flexible printed circuit board antenna and a wound coil.

In this embodiment of this application, the first matching filter module 12 includes an electromagnetic compatibility filter and an impedance matching network. The first matching filter module 12 may be configured to filter out unnecessary operating frequencies from the radio frequency energy through the electromagnetic compatibility filter after receiving the radio frequency energy, adjust an operating frequency of the radio frequency energy through the impedance matching network, and send the radio frequency energy to the rectifier module 13.

In this embodiment of this application, the rectifier module 13 includes, but is not limited to, at least one of a diode rectifier bridge or a metal-oxide-semiconductor field-effect transistor (Metal-Oxide-Semiconductor, MOS) rectifier bridge. The rectifier module 13 may be configured to convert the radio frequency energy into direct-current energy, and send the direct-current energy to the impedance transformation module 14.

In this embodiment of this application, the impedance transformation module 14 may be configured to receive a driving signal sent by the first microcontroller module 15 to adjust a duty cycle of a driving signal of the impedance transformation module 14 and output a target voltage for storage or consumption by the battery and protection circuit module 16. The impedance transformation module 14 may be a direct-current impedance converter. The direct-current impedance converter includes at least one of a single-ended primary inductive converter (Single-ended Primary Inductive converter, SEPIC), a direct-current buck-boost (Care Unite Skin, CUK) converter, and a direct-current boost-buck (Boost-Buck) converter.

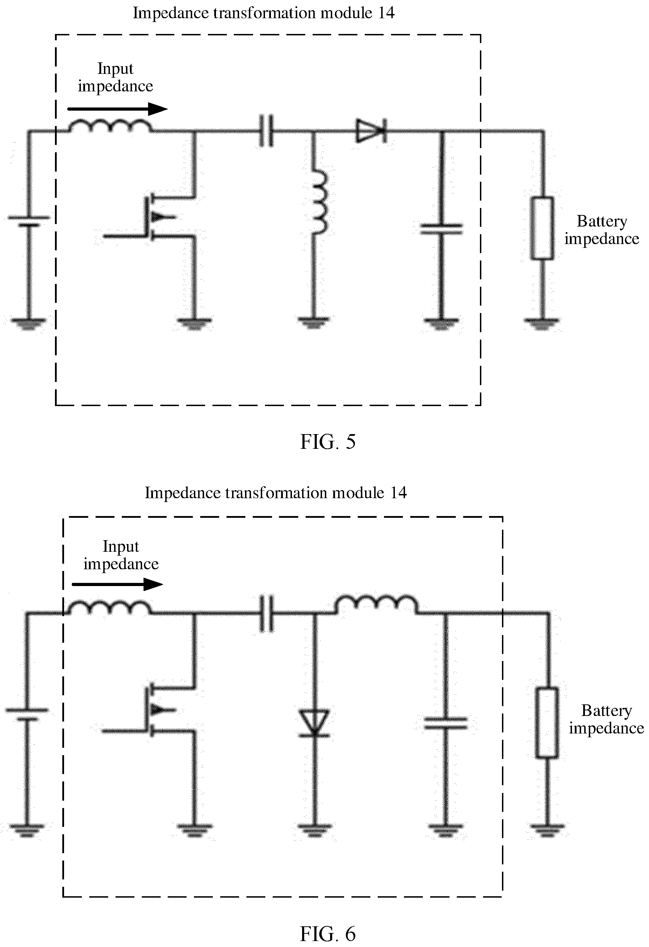

FIG. 5 is a schematic diagram of a circuit of a single-ended primary inductive converter according to an embodiment of this application. As shown in FIG. 5, in the single-ended primary inductive converter, a transformer is replaced with two inductors, so that magnetic elements may be used in a circuit in which the single-ended primary inductive converter is located, which saves the costs of using a dedicated transformer.

FIG. 6 is a schematic diagram of a circuit of a direct-current buck-boost converter according to an embodiment of this application. As shown in FIG. 6, in the direct-current buck-boost converter, there is only one switch, leading to easy control, a duty cycle may be greater than 0.5, and one capacitor transmits energy between the input and the output, which is beneficial to reducing the size and increasing the power density. Moreover, there are inductors at both an input end and an output end, which effectively reduces current pulses at the input end and output end, so that both input and output currents are continuous. A switching current is limited inside the converter, and generates small output ripples and electromagnetic interference.

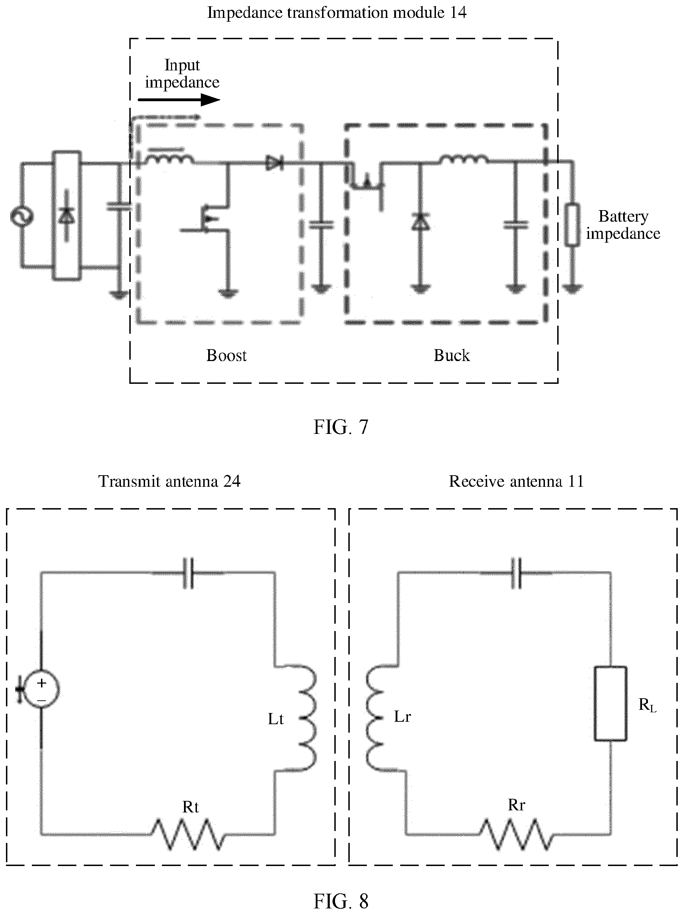

FIG. 7 is a schematic diagram of a direct-current boost-buck converter according to an embodiment of this application. As shown in FIG. 7, in the direct-current boost-buck converter, input and output currents are continuous, an output voltage has a large adjustable range, and the output voltage may be greater or less than the output voltage, leading to good practicability.

Therefore, for different scenarios, different types of direct-current impedance converters may be arranged on the power receiving apparatus 102 to adjust the target voltage.

In this embodiment of this application, the first microcontroller module 15 may be configured to adjust the duty cycle of the driving signal of the impedance transformation module 14 and detects changes of a battery voltage and battery impedance of the battery and protection circuit module 16.

In this embodiment of this application, the battery and protection circuit module 16 may be configured to receive the target voltage output by the impedance transformation module 14, to store or consume the direct-current energy corresponding to the target voltage.

In this embodiment of this application, the first communication module 17 may be configured to receive the battery voltage and the battery impedance that are detected by the first microcontroller module 15, and transmit the battery voltage and the battery impedance to the second communication module 26, to enable the power receiving apparatus 102 to output target power based on the received battery voltage and the received battery impedance. The first communication module 17 may implement a wireless connection to the second communication module 26 in an out-of-band communication manner such as Bluetooth (Bluetooth), wireless broadband (Wireless-Fidelity, Wi-Fi), Zigbee protocol (Zigbee), radio frequency identification (Radio Frequency Identification, RFID), a long range (Long range, Lora) wireless technology, near-field communication (Near-Field Communication, NFC).

Based on the foregoing manner of arranging the power transmission apparatus, a specific manner in which the first microcontroller module 15 is configured to adjust the duty cycle of the driving signal of the impedance transformation module 14 is as follows:

In this embodiment of this application, an optimal value of input impedance of the impedance transformation module is preset in the first microcontroller module 15. The optimal value of input impedance may be obtained in the following manner:

First, total antenna efficiency is obtained based on a product of efficiency of the receive antenna 11 and efficiency of the transmit antenna 24. Antenna efficiency refers to a ratio of power radiated by an antenna to active power input to the antenna.

FIG 8 provides a partial simplified schematic diagram of a circuit of the power transmission apparatus 100 according to an embodiment of this application.

In the circuit shown in FIG. 8, efficiency of the receive antenna 11 is:

$$\eta_{11} = \frac{R_r}{R_r + R_L}, \text{ where (3)}$$

$\eta_{11}$ is the efficiency of the receive antenna 11, $R_r$ is internal resistance of the receive antenna 11, and $R_L$ is equivalent load impedance in the power receiving apparatus.

It should be noted herein that equivalent impedance is a concept in the transmission line theory. In a process of designing a power transmission apparatus, impedance at a specified position on a transmission line, that is, a ratio of voltage to current at this position, needs to be specifically learned of. The equivalent impedance refers to a ratio of an incident wave and a reflected wave after superposition, and exists in a form of a position function. The equivalent impedance changes with as the position changes. The equivalent impedance relates to a perspective problem. For example, impedance from a perspective toward a load is equivalent load impedance, and impedance from a perspective toward a source is equivalent source impedance. In this embodiment of this application, $R_L$ is load impedance.

The efficiency of the transmit antenna 24 is:

$$\eta_{24} = \frac{R_{eq}}{R_{eq} + R_t}, \text{ where (4)}$$

$\eta_{24}$ is efficiency of the transmit antenna 24, $R_{eq}$ is equivalent load impedance of the power receiving apparatus in the power sending apparatus, $R_t$ is internal resistance of the transmit antenna 24.

In this case, total antenna efficiency $\eta_{total}$ is:

$$\eta_{total} = \eta_{24} \times \eta_{11} = \frac{R_{eq}}{R_{eq} + R_t} \times \frac{R_r}{R_r + R_L} . (5)$$

Let

$$Q_t = \frac{\omega L_t}{R_t} \quad (6)$$

and

$$Q_r = \frac{\omega L_r}{R_r} \quad (7),$$

where

Qt is a quality factor of the transmit antenna 24, $Q_r$ is a quality factor of the receive antenna 11, $\omega$ is an angular frequency, $L_t$ is inductance of the transmit antenna 24, and $L_r$ is inductance of the receive antenna 11.

In this case,

$$\eta_{total} = \frac{\dfrac{\omega^2 M^2}{R_r + R_L}}{\dfrac{\omega^2 M^2}{R_r + R_L} + R_t} \times \frac{R_r}{R_r + R_L}$$

$$= \frac{k^2 Q_t Q_r R_L}{\dfrac{R_L^2}{R_r} + R_L(2 + k^2 Q_t Q_r) + R_r(1 + k^2 Q_t Q_r)}, \text{ where } (8)$$

k is a coupling coefficient between coils.

By deriving a formula (8), an extremum can be obtained.

Letting $\eta'_{total}$=0, it can be obtained that a maximum of the total antenna efficiency is:

$$\eta_{total} = \frac{k^2 Q_t Q_r}{(1 + \sqrt{1 + (k^2 Q_t Q_r)^2}} \quad . \ (9)$$

In this case, let:

$$R_L = R_r \sqrt{1 + (k^2 Q_t Q_r)^2} \quad . \ (10)$$

Subsequently, using the rectifier module 13 being a diode rectifier bridge as an example, an impedance transformation rule corresponding to the rectifier module 13 is:

$$Z_L = \frac{8}{\pi^2} R_L, \text{ where } (11)$$

$Z_L$ is load impedance from a perspective the rectifier module, and in addition, is equal to input impedance of the impedance transformation module 14.

To ensure that the input impedance $Z_L$ of the impedance transformation module 14 is fixed at an optimal value,

$$Z_L = (1 - D^2)\frac{R}{D^2} = \frac{8}{\pi^2} R_r \sqrt{1 + (k^2 Q_t Q_r)^2}, \text{ where } (12)$$

$R$ is the battery impedance, and D is the duty cycle of the driving signal in the impedance transformation module 14.

An optimal value of the input impedance of the impedance transformation module 14 may be obtained based on the calculation method of the formula (12).

The first microcontroller module 15 presets the optimal value of the input impedance of the impedance transformation module 14.

The first microcontroller module 15 may be further configured to send the driving signal to the impedance transformation module 14 based on the preset optimal value of the input impedance and the battery impedance to adjust the duty cycle of the driving signal in the impedance transformation module 14. A value of the duty cycle is calculated based on the following formula (13):

$$D = \sqrt{\frac{R}{R + \dfrac{\pi^2}{8} R_r \sqrt{1 + (k^2 Q_t Q_r)^2}}} \cdot (13)$$

It should be noted herein that a duty cycle is a ratio of high-level duration of a driving signal in one cycle to one cycle. For example, if one driving cycle of a driving signal is 2 microseconds, where high-level duration is 1 microsecond, a duty cycle is 50%.

In a specific implementation, the first microcontroller module 15 controls a voltage average of a voltage signal by adjusting the duty cycle of the driving signal in the impedance transformation module 14, to enable the impedance transformation module 14 to output the target voltage. When the impedance transformation module 14 outputs the target voltage, the input impedance of the impedance transformation module 14 is at the optimal value of the input impedance. It should be noted herein that the duty cycle is determined based on the optimal value of the input impedance and the battery impedance. Since the optimal value of the input impedance is a preset value, and the battery impedance is a variable obtained in real time, the duty cycle changes as the battery impedance changes, the target voltage output by the impedance transformation module 14 changes as the duty cycle changes. In this case, load impedance from the perspective of the rectifier module 13 is fixed at an optimal value, and the impedance transformation module 14 fixes the input impedance at the optimal value, so that load impedance of the power receiving apparatus 102 is fixed at an optimal value.

To ensure that the load impedance of the power receiving apparatus is at the optimal value, radio frequency energy received by the power receiving apparatus 102 should have a constant value. According to the energy conservation law, operating power of the battery and protection circuit module 16 remains unchanged, that is:

$$P_{\text{power}} = \frac{V_{\text{out}}^2}{R},$$

where

$P_{\text{power}}$ is the operating power of the battery and protection circuit module 16, $V_{\text{out}}$ is the battery voltage, and R is the battery impedance.

$P_{\text{power}}$ is a constant value. When the battery impedance increases, the battery voltage increases. When the battery impedance decreases, the battery voltage decreases. Due to a limited range of an operating voltage of the battery, when the battery voltage increases, it is possible that the battery voltage exceeds a maximum voltage. In addition, the power sending apparatus 101 needs to adjust the target power output by the transmit antenna 24 in real time based on the battery voltage and the battery impedance, to enable the load impedance from the perspective of the rectifier module 13 to at the optimal value.

Based on this, the first microcontroller module 15 is further configured to detect the battery and protection circuit module 16 to avoid overcharging of the battery and protection circuit module 16, and transmit the battery impedance and the battery voltage to the power sending apparatus 101 in real time. A specific manner is as follows:

The first microcontroller module is 15 further configured to detect a charge state of the battery and protection circuit module 16, to determine whether charging of the battery and protection circuit module 16 is completed.

In a specific implementation, the charging is performed with a voltage that is a constant voltage, and the charging is performed with a current that is a trickle. The charging of the battery and protection circuit module 16 is considered to be completed until the electric current is less than a specific set value.

In this embodiment of this application, the first microcontroller module 15 is further configured to perform voltage detection on the battery and protection circuit module once every delay threshold if the charging of the battery and protection circuit module 16 is not completed, to obtain a detected battery voltage. For example, the delay threshold may be set to 3 microseconds, and in this embodiment of this application, the delay threshold is only for illustrative descriptions, and may be specifically set according to actual conditions. The delay threshold is actually duration of communication between the first communication module 17 and the second communication module 26. The setting of the delay threshold may ensure a frequency of communication between the first communication module 17 and the second communication module 26, to enable the transmit antenna 24 to adjust the output target power in real time.

In this embodiment of this application, the battery and protection circuit module 16 is further configured to stop, if the charging of the battery and protection circuit module 16 is completed, receiving the target voltage output by the impedance transformation module 14. For example, a maximum voltage of the battery of the battery and protection circuit module 16 is 5 V. When the target voltage received by the battery and protection circuit module 16 is 5 V and the current is less than C/10, receiving of the target voltage output by the impedance transformation module 14 is stopped.

In this embodiment of this application, the battery and protection circuit module 16 may be further configured to receive the target voltage output by the impedance transformation module 14, and turn on at least one protection circuit if the target voltage is greater than the maximum voltage of the battery, where the at least one protection circuit includes at least one transient voltage diode (Transient Voltage Suppressor, TVS). In this way, when the battery impedance increases, the equivalent load impedance of the power receiving apparatus increases, and the target voltage output by the impedance transformation module 14 increases. Using the maximum voltage being 5 V as an example, when the target voltage is 5.5 V, that is, is greater than 5 V, at least one protection circuit is immediately turned on to avoid overcharge damage to the battery.

In this embodiment of this application, the first microcontroller module 15 may be further configured to determine whether the detected battery voltage is equal to the maximum voltage of the battery, determine detected battery impedance based on the detected battery voltage if the detected battery voltage is equal to the maximum voltage of the battery, and perform next detection to determine whether the charging of the battery and protection circuit module is completed.

For example, the maximum voltage of the battery and protection circuit module 16 is set to 5 V, and the delay threshold is set to 3 microseconds. When detecting that a voltage value of the battery is 4.8 V, the first microcontroller module 15 may detect the battery voltage again after 3 microseconds, and obtain a detected voltage value of 5 V. Therefore, after the detected battery voltage is equal to the maximum voltage of the battery, the first microcontroller module 15 also needs to detect a charge state of the battery and protection circuit module 16 to determine whether the charging is completed, to avoid overcharging.

In this embodiment of this application, the first microcontroller module 15 may be further configured to determine, if the detected battery voltage is less than the maximum voltage of the battery, whether the detected battery voltage falls within a receive threshold range, where a receive threshold represents a deviation degree of the target voltage; detect the charge state of the battery and protection circuit module a next time if the detected battery voltage falls within the receive threshold range, to determine whether the charging of the battery and protection circuit module is completed; and determine the detected battery impedance based on the detected battery voltage if the detected battery voltage does not fall within the receive threshold range, and detect the charge state of the battery and protection circuit module a next time.

It should be noted herein that the target voltage fluctuates in an actual output process, which will cause a voltage deviation when the battery voltage receives the target voltage. Based on this, the first microcontroller module 15 sets a receive threshold to determine whether the battery voltage exceeds a proper deviation degree.

For example, the receive threshold may be set to $[0.95 \times V_{\text{nominal}}, 1.05 \times V_{\text{nominal}}]$, where $V_{\text{nominal}}$ is the target voltage. For example, the target voltage is 4.2 V, the battery voltage is 4.1 V, and the receive threshold is [0.95×4.2 V, 1.05×4.2 V]. In this case, the battery voltage falls within the receive threshold range, indicating that the battery voltage falls within a proper deviation range.

If the battery voltage exceeds the receive threshold, battery impedance corresponding to a current battery voltage needs to be recalculated based on the current battery voltage, to enable the power sending apparatus 101 to output the target power based on the current battery voltage and the battery impedance corresponding to the current battery voltage.

In this embodiment of this application, the first communication module 17 may be further configured to send the detected battery voltage and the detected battery impedance to the power sending apparatus 101, to enable the power sending apparatus 101 to adjust the output target power.

Since the first communication module 17 sends the detected battery voltage and the detected battery impedance to the second communication module 26 in real time, when a value of the target voltage output by the impedance transformation module 14 is too high, the power sending apparatus 101 adjusts the output target power based on the received battery voltage and the received battery impedance, to reduce the target voltage. It should be noted that it is possible that the power sending apparatus 101 cannot immediately reduce the target voltage to an expected range based only on the battery voltage and the battery impedance that are sent once, and instead, the power sending apparatus 101 needs to perform adjustment a plurality of times based on the battery voltages and the battery impedance that are sent a plurality of times, to reduce the target voltage to the expected range.

To optimize the efficiency of the power receiving apparatus 102 in the transmission state, it is necessary to ensure that the source impedance is also at an optimal value when the load impedance is an optimal value. The first communication module 17 may be configured to send the battery voltage and the battery impedance to the second communication module 26, to enable the power amplifier module 22 to output the target power based on the battery voltage and the battery impedance.

In this embodiment of this application, the second communication module 26 is configured to receive the battery voltage and the battery impedance that are sent by the first communication module 17.

The second microcontroller module 25 may be configured to send a control signal to the power amplifier module 22 based on the battery voltage and the battery impedance after the second communication module 26 receives the battery voltage and the battery impedance, to adjust the operating frequency of the power amplifier module 22, so that the power amplifier module 22 transmits the target power when the source impedance is at an optimal value.

The target power may be obtained in the following manner:

$$P_{\text{output}} = \frac{V_{\text{nominal}}^2}{R \times \eta_{\text{total}}} \, ,$$

where

$P_{\text{output}}$ is the target power, $V_{\text{nominal}}$ is the target voltage, R is the battery impedance, and $\eta_{\text{total}}$ is the total antenna efficiency.

It should be noted that, because a communication duration delay exists between the first communication module 17 and the second communication module 26, the target power is usually adjusted based on an expected voltage rather than the target voltage.

In this embodiment of this application, the operating frequency band of the power transmission apparatus includes 6.78 MHz and/or 13.56 MHz. This embodiment of this application may also be applied to other operating frequency bands. The technical solution shown in this embodiment of this application may cover more frequency bands to optimize efficiency of the power transmission apparatus 100 in the entire transmission state.

It can be learned from the foregoing technical solution that the power transmission apparatus shown in this embodiment of this application can resolve the problem that when some frequency bands have narrow operating bandwidths, the power transmission apparatus cannot achieve optimal efficiency in the entire transmission state because load impedance of the power receiving apparatus has a broad change range, and an optimal value of the load impedance cannot be achieved through frequency regulation, so that the load impedance of the power receiving apparatus can be controlled to the optimal value in real time, to optimize the efficiency of the power transmission apparatus in the entire transmission state.

An embodiment of this application further provides a power transmission method.

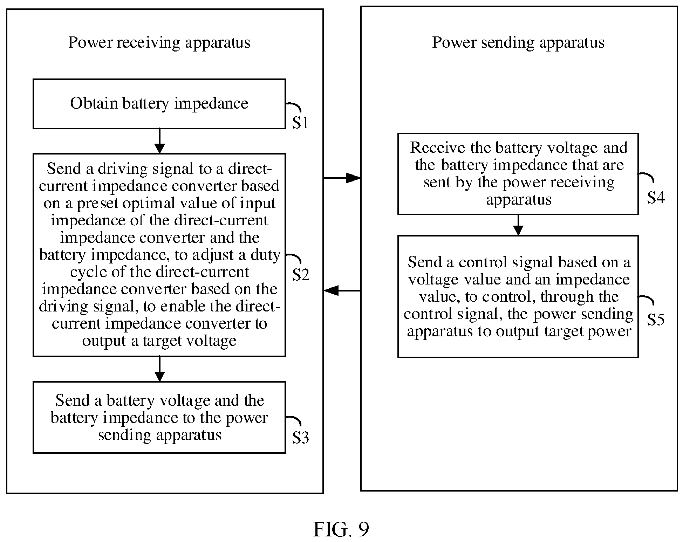

FIG. 9 is a schematic flowchart of a power transmission method according to an embodiment of this application. As shown in FIG. 9, the power transmission method provided in this embodiment of this application is applied to a power receiving apparatus. The method includes the following steps:

S1: Obtain battery impedance.

S2: Send a driving signal to a direct-current impedance converter based on a preset optimal value of input impedance of the direct-current impedance converter and the battery impedance, to adjust a duty cycle of a driving signal in the direct-current impedance converter, to enable the direct-current impedance converter to output a target voltage, where the duty cycle is a ratio of high-level duration of the driving signal in one cycle to one cycle, and when the direct-current impedance converter outputs the target voltage, the input impedance is at the optimal value of the input impedance.

S3: Send a battery voltage and the battery impedance to a power sending apparatus.

In some embodiments, the method further includes: receiving the target voltage output by the direct-current impedance converter; and turning on at least one protection circuit if the target voltage is greater than a rated voltage of the battery. The at least one protection circuit includes at least one transient voltage diode.

According to the invention, the method further includes: detecting a charge state of the power receiving apparatus, to determine whether charging of the power receiving apparatus is completed; performing voltage detection on the power receiving apparatus once every delay threshold if the charging of the power receiving apparatus is not completed, to obtain a detected battery voltage; and stopping, if the charging of the power receiving apparatus is completed, receiving the target voltage output by the direct-current impedance converter.

According to the invention, the method further includes: determining whether the detected battery voltage is equal to the maximum voltage of the battery; determining detected battery impedance based on the detected battery voltage if the detected battery voltage is equal to the maximum voltage of the battery; performing next detection to determine whether the charging of the battery and protection circuit module is completed; and sending the detected battery voltage and the detected battery impedance to the power sending apparatus.

In some embodiments, the method further includes: determining, if the detected battery voltage is less than the maximum voltage of the battery, whether the detected battery voltage falls within a receive threshold range, where a receive threshold represents a deviation degree of the target voltage; detecting the charge state of the power receiving apparatus a next time if the detected battery voltage falls within the receive threshold range, to determine whether the charging of the power receiving apparatus is completed; and determining the detected battery impedance based on the detected battery voltage if the detected battery voltage does not fall within the receive threshold range, and detecting the charge state of the power receiving apparatus a next time.

The power transmission method provided by this embodiment of this application is also applied to the power sending apparatus. The method includes:

S4: Receive the battery voltage and the battery impedance sent by the power receiving apparatus.

S5: Send a control signal based on the battery voltage and the battery impedance, to control, through the control signal, the power sending apparatus to output the target power, where the target power is for enabling the input impedance of the direct-current impedance converter in the power receiving apparatus to reach an optimal value of the input impedance.

In the power transmission method provided in this embodiment of this application, the operating frequency band used to transmit radio frequency energy includes 6.78 MHz and/or 13.56 MHz.

It can be learned from the foregoing technical solution that the power transmission method shown in this embodiment of this application can resolve the problem that when some frequency bands have narrow operating bandwidths, the power transmission apparatus cannot achieve optimal efficiency in the entire transmission state because load impedance of the power receiving apparatus has a broad change range, and an optimal value of the load impedance cannot be achieved through frequency regulation, so that the load impedance of the power receiving apparatus can be controlled to the optimal value in real time, to optimize the efficiency of the power transmission apparatus in the entire transmission state.

An embodiment of this application, which is not separately claimed, further provides a wireless charger, including the power sending apparatus provided in an embodiment of this application and any implementation thereof.

An embodiment of this application further provides an electronic device, including the power receiving apparatus provided in an embodiment of this application and any implementation thereof, and/or the power sending apparatus (configured to implement a wireless reverse charge function) provided in an embodiment of this application and any implementation thereof. A type of the electronic device includes, but is not limited to, an electronic device such as a mobile phone, a tablet computer, a notebook computer, a large-screen device (such as a smart TV or a smart screen), a personal computer (personal computer, PC), a handheld computer, a netbook, a personal digital assistant (personal digital assistant, PDA), a wearable electronic device, an in-vehicle device, or a virtual reality device. The electronic device may alternatively be an electronic product such as a wirelessly charged electric vehicle, a wirelessly charged household appliance, a wirelessly charged headphone, and an unmanned aerial vehicle.

It should be understood that in various embodiments of embodiments in this application, an order of sequence numbers of the foregoing processes does not indicate an execution sequence, and execution sequences of the processes should be determined according to functions and internal logic thereof and should not impose any limitation on an implementation process of the embodiments.

The parts of this specification are all described in a progressive manner, for same or similar parts in the embodiments, refer to such embodiments, and descriptions of each embodiment focus on a difference from other embodiments. Especially, apparatus and system embodiments are basically similar to a method embodiment, and therefore are described briefly. For related parts, reference may be made to partial descriptions in the method embodiment.

The foregoing specific implementations further describe the objectives, technical solutions in detail, and beneficial effects of the present invention. It should be appreciated that the foregoing descriptions are merely specific implementations of the present invention, but are not intended to limit the protection scope of the present invention.

**Claims**

1. A power receiving apparatus (102), comprising: a battery and protection circuit module (16), a first microcontroller module (15), an impedance transformation module (14), and a first communication module (17), wherein

the first microcontroller module (15) is configured to perform voltage detection on the battery and protection circuit module (16) to obtain a detected battery voltage, determine battery impedance based on the detected battery voltage, and send a driving signal to the impedance transformation module (14) based on a preset constant value and the battery impedance, wherein the constant value represents a value of input impedance of the impedance transformation module;

the impedance transformation module (14) is configured to output a target voltage to the battery and protection circuit module (16) based on the driving signal, wherein the target voltage is an output voltage of the impedance transformation module (14) obtained by adjusting an input voltage of the impedance transformation module (14) based on the driving signal;

the battery and protection circuit module (16) is further configured to receive the target voltage output by the impedance transformation module (14); and

the first communication module (17) is configured to send values of the target voltage and the battery impedance to a second communication module (26) of a power sending apparatus (101), the values of the target voltage and the battery impedance are configured to enable the power sending apparatus to calculate target power based on the target voltage and the detected battery impedance, and adjust the target voltage based on the target power; wherein

the first microcontroller module (15) is specifically configured to detect a charge state of the battery and protection circuit module (16), to determine whether charging of the battery and protection circuit module (16) is completed; and perform voltage detection on the battery and protection circuit module (16) once every delay threshold if the charging of the battery and protection circuit module (16) is not completed, to obtain the detected battery voltage; and

the battery and protection circuit module (16) is further configured to stop, if the charging of the battery and protection circuit module (16) is completed, receiving the target voltage output by the impedance transformation module (14); and

wherein

the first microcontroller module (15) is further configured to determine whether the detected battery voltage is equal to the maximum voltage of the battery;

the first microcontroller module (15) is further configured to determine the detected battery impedance based on the detected battery voltage if the detected battery voltage is equal to the maximum voltage of the battery, and detect the charge state of the battery and protection circuit module (16) again.

2. The power receiving apparatus according to claim 1, wherein

the first microcontroller module is specifically configured to adjust a duty cycle of the driving signal based on a preset constant value and the battery impedance, wherein the duty cycle is a ratio of high-level duration of the driving signal in one cycle to one cycle; and

when the impedance transformation module outputs the target voltage, the input impedance of the impedance transformation module is at the preset constant value.

3. The power receiving apparatus according to claim 1, wherein the target power is a ratio of a square of the target voltage to a product of the detected battery impedance and total antenna efficiency.

4. The power receiving apparatus according to claim 3, wherein

the first communication module is specifically configured to send the target voltage and the detected battery impedance to the power sending apparatus, to enable the power sending apparatus to calculate the target power based on the target voltage, the detected battery impedance, and the total antenna efficiency, and adjust the target voltage based on the target power.

5. The power receiving apparatus according to the claim 1, wherein the impedance transformation module is a direct-current impedance converter, and the direct-current impedance converter comprises at least one of a single-ended primary inductive converter, a direct-current buck-boost converter, and a direct-current boost-buck converter.

6. The power receiving apparatus according to claim 1, wherein

the battery and protection circuit module is further configured to receive the target voltage output by the impedance transformation module; and turn on at least one protection circuit if the target voltage is greater than a maximum voltage of the battery, wherein the at least one protection circuit comprises at least one transient voltage diode.

7. The power receiving apparatus according to claim 1, wherein

the first microcontroller module is further to determine, if the detected battery voltage is less than the maximum voltage of the battery, whether the detected battery voltage falls within a receive threshold range, wherein a receive threshold represents a deviation degree of the target voltage;

the first microcontroller module is further configured to detect the charge state of the battery and protection circuit module again if the detected battery voltage falls within the receive threshold range, to determine whether the charging of the battery and protection circuit module is completed; and

the first microcontroller module is further configured to determine the detected battery impedance based on the detected battery voltage if the detected battery voltage does not fall within the receive threshold range, and detect the charge state of the battery and protection circuit module again.

8. A power transmission apparatus (100) comprising a power receiving apparatus (102) according to any one of claims 1 to 7 and a power sending apparatus (101), the power sending apparatus (101) comprising: a second communication module (26), a second microcontroller module (25), and a power amplifier module (22), wherein

the second communication module (26) is configured to receive said values of the target voltage and detected battery impedance that are sent by the power receiving apparatus (102); and
the second microcontroller module (26) is configured to send a control signal to the power amplifier module (22) based on the values of the target voltage and the detected battery impedance, to control, through the control signal, the power amplifier module (22) to output target power, wherein the target power is for adjusting the target voltage, the target voltage is an output voltage of a direct-current impedance converter (14) in the power receiving apparatus (102), and input impedance of the direct-current impedance converter (14) is a preset constant value.

9. The power transmission apparatus according to claim 8, wherein the target power is a ratio of a square of the target voltage to a product of the detected battery impedance and total antenna efficiency.

10. The power transmission apparatus according to any one of claims 8 to 9, wherein an operating frequency band used by the power receiving apparatus and the power sending apparatus to transmit radio frequency energy comprises 6.78 MHz and/or 13.56 MHz.

11. A power transmission method applied to a power receiving apparatus (102), wherein the power receiving apparatus (102) comprises a battery and protection circuit module (16), a first microcontroller module (15), an impedance transformation module (14), and a first communication module (17), and wherein the method comprises:

performing, by the first microcontroller module (15), voltage detection on the battery and protection circuit module (16) to obtain a battery voltage, determine battery impedance based on the battery voltage, and send a driving signal to the impedance transformation module (14) based on a preset constant value and the battery impedance, wherein the constant value represents a value of input impedance of the impedance transformation module (14);
outputting, by the impedance transformation module (14), a target voltage to the battery and protection circuit module (16) based on the driving signal, wherein the target voltage is an output voltage of the impedance transformation module (14) obtained by adjusting an input voltage of the impedance transformation module (14) based on the driving signal;
obtaining, by the battery and protection circuit module (16), the target voltage output by the impedance transformation module; and
sending, by the first communication module (17), values of the target voltage and the battery impedance to a second communication module (26) of a power sending apparatus, the values of the target voltage and the battery impedance are used to enable the power sending apparatus to calculate target power based on the target voltage and the detected battery impedance, and adjust the target voltage based on the target power; and wherein the method further comprises:

detecting, by the first microcontroller module (15), a charge state of the battery and protection circuit module (16), to determine whether charging of the battery and protection circuit module (16) is completed; and
performing voltage detection on the battery and protection circuit module (16) once every delay threshold if the charging of the battery and protection circuit module (16) is not completed, to obtain the detected battery voltage; and
stop, by the battery and protection circuit module (16), if the charging of the battery and protection circuit module (16) is completed, receiving the target voltage output by the impedance transformation module (14);
determining, by the first microcontroller module (15), whether the detected battery voltage is equal to the maximum voltage of the battery; and
determining, by the first microcontroller module (15), the detected battery impedance based on the detected battery voltage if the detected battery voltage is equal to the maximum voltage of the battery, and detecting the charge state of the battery and protection circuit module (16) again.

12. The power transmission method according to claim 11, wherein the outputting a target voltage to the battery and protection circuit module based on the driving signal comprises:

adjust a duty cycle of the driving signal based on a preset constant value and the battery impedance, wherein the duty cycle is a ratio of high-level duration of the driving signal in one cycle to one cycle; and
when the impedance transformation module outputs the target voltage, the input impedance of the impedance transformation module is at the preset constant value.

13. The power transmission method according to claim 11, wherein the target power is a ratio of a square of the target voltage to a product of the detected battery impedance and total antenna efficiency.

**Patentansprüche**

1. Eine Energieempfangsvorrichtung (102), umfassend: ein Batteriemodul und Schutzschaltungsmodul (16), ein erstes Mikrocontroller-Modul (15), ein Impedanzwandlungsmodul (14) und ein erstes Kommunikationsmodul (17), wobei

das erste Mikrocontroller-Modul (15) dazu ausgelegt ist, eine Spannungsmessung am Batteriemodul und Schutzschaltungsmodul (16) auszuführen, um eine ermittelte Batteriespannung zu erhalten, den Batterieimpedanzwert auf Basis der ermittelten Batteriespannung zu bestimmen und basierend auf einem vorgegebenen Konstantwert sowie der Batterieimpedanz ein Steuersignal an das Impedanzwandlungsmodul (14) zu senden, wobei der Konstantwert den Wert des Eingangswiderstands des Impedanzwandlungsmoduls angibt;
das Impedanzwandlungsmodul (14) dazu ausgelegt ist, dem Batteriemodul und Schutzschaltungsmodul (16) eine Zielspannung basierend auf dem Steuersignal auszugeben, wobei die Zielspannung eine Ausgangsspannung des Impedanzwandlungsmoduls (14) ist, die durch Justieren der Eingangsspannung des Impedanzwandlungsmoduls (14) basierend auf dem Steuersignal erhalten wird;
das Batteriemodul und Schutzschaltungsmodul (16) ferner dazu ausgelegt ist, die vom Impedanzwandlungsmodul (14) ausgegebene Zielspannung zu empfangen; und
das erste Kommunikationsmodul (17) dazu ausgelegt ist, Werte der Zielspannung und der Batterieimpedanz an ein zweites Kommunikationsmodul (26) einer Energieübertragungsvorrichtung (101) zu senden, wobei die Werte der Zielspannung und der Batterieimpedanz dazu konfiguriert sind, der Energieübertragungsvorrichtung zu ermöglichen, die Zielleistung anhand der Zielspannung und der ermittelten Batterieimpedanz zu berechnen und die Zielspannung anhand der Zielleistung anzupassen;
wobei
das erste Mikrocontroller-Modul (15) speziell dazu ausgelegt ist, einen Ladezustand des Batteriemoduls und Schutzschaltungsmoduls (16) zu detektieren, um festzustellen, ob das Laden des Batteriemoduls und Schutzschaltungsmoduls (16) abgeschlossen ist; und, falls das Laden des Batteriemoduls und Schutzschaltungsmoduls (16) nicht abgeschlossen ist, einmal pro vorgegebener Verzögerungsschwelle eine Spannungsmessung am Batteriemodul und Schutzschaltungsmodul (16) durchzuführen, um die ermittelte Batteriespannung zu erhalten; und
das Batteriemodul und Schutzschaltungsmodul (16) ferner dazu ausgelegt ist, falls das Laden des Batteriemoduls und Schutzschaltungsmoduls (16) abgeschlossen ist, das Empfangen der vom Impedanzwandlungsmodul (14) ausgegebenen Zielspannung zu beenden; und
wobei
das erste Mikrocontroller-Modul (15) ferner dazu ausgelegt ist, zu bestimmen, ob die ermittelte Batteriespannung gleich der Maximalspannung des Batteriemoduls ist;
Das erste Mikrocontroller-Modul (15) ist ferner so konfiguriert, dass es den erkannten Batterieimpedanzwert basierend auf der erkannten Batteriespannung bestimmt, wenn die erkannte Batteriespannung gleich der Maximalspannung der Batterie ist, und den Ladezustand der Batterie sowie das Schutzschaltungsmodul (16) erneut erfasst.

2. Empfangseinrichtung gemäß Anspruch 1, wobei

das erste Mikrocontroller-Modul speziell so konfiguriert ist, dass es einen Tastgrad des Steuersignals auf Basis eines voreingestellten konstanten Werts und der Batterieimpedanz anpasst, wobei der Tastgrad das Verhältnis der Hochpegel-Dauer des Steuersignals innerhalb eines Zyklus zur gesamten Zyklusdauer ist; und
wenn das Impedanzwandlermodul die Zielspannung ausgibt, hat der Eingangswiderstand des Impedanzwandlermoduls den voreingestellten konstanten Wert.

3. Empfangseinrichtung gemäß Anspruch 1, wobei die Zielleistung das Verhältnis des Quadrats der Zielspannung zum Produkt aus der erkannten Batterieimpedanz und dem Gesamtantennengewirkungsgrad ist.

4. Empfangseinrichtung gemäß Anspruch 3, wobei
das erste Kommunikationsmodul speziell so konfiguriert ist, dass es die Zielspannung und die erkannte Batterieimpedanz an die Sendereinrichtung übermittelt, damit die Sendereinrichtung die Zielleistung auf Basis der Zielspannung, der erkannten Batterieimpedanz und des Gesamtantennengewirkungsgrads berechnen und die Zielspannung basierend auf der Zielleistung anpassen kann.

5. Empfangseinrichtung gemäß Anspruch 1, wobei das Impedanzwandlermodul ein Gleichstrom-Impedanzwandler ist, und der Gleichstrom-Impedanzwandler wenigstens einen der folgenden umfasst: einen Single-Ended Primär-Induktivwandler, einen Gleichstrom-Buck-Boost-Wandler und einen Gleichstrom-Boost-Buck-Wandler.

6. Empfangseinrichtung gemäß Anspruch 1, wobei

das Batterie- und Schutzschaltungsmodul ferner dazu konfiguriert ist, die vom Impedanzwandlermodul ausgegebene Zielspannung zu empfangen und mindestens einen Schutzschaltkreis einzuschalten, wenn die Zielspannung größer als die Maximalspannung der Batterie ist, wobei der mindestens eine Schutzschaltkreis mindestens eine Transientenspannungsdiode umfasst.

7. Empfangseinrichtung gemäß Anspruch 1, wobei

das erste Mikrocontroller-Modul ferner bestimmt, ob - falls die erkannte Batteriespannung kleiner ist als die Maximalspannung der Batterie - die erkannte Batteriespannung im Empfangsschwellenbereich liegt, wobei die Empfangsschwelle einen Abweichungsgrad der Zielspannung darstellt;

Das erste Mikrocontroller-Modul ist ferner dazu konfiguriert, den Ladezustand des Batterie- und Schutzschaltkreis-Moduls erneut zu detektieren, wenn die detektierte Batteriespannung innerhalb des Empfangsschwellenwertbereichs liegt, um zu bestimmen, ob das Laden des Batterie- und Schutzschaltkreis-Moduls abgeschlossen ist; und

Das erste Mikrocontroller-Modul ist ferner dazu konfiguriert, den ermittelten BatterieImpedanzwert basierend auf der detektierten Batteriespannung zu bestimmen, falls die detektierte Batteriespannung nicht innerhalb des Empfangsschwellenwertbereichs liegt, und den Ladezustand des Batterie- und Schutzschaltkreis-Moduls erneut zu erfassen.

8. Eine Energieübertragungsvorrichtung (100), die eine Energieempfangsvorrichtung (102) gemäß einem der Ansprüche 1 bis 7 und eine Energieabgabevorrichtung (101) umfasst, wobei die Energieabgabevorrichtung (101) umfasst: ein zweites Kommunikationsmodul (26), ein zweites Mikrocontroller-Modul (25) und ein Leistungsverstärkermodul (22), wobei

das zweite Kommunikationsmodul (26) dazu konfiguriert ist, die vom Energieempfangsgerät (102) gesendeten Werte der Zielspannung und der ermittelten Batterieimpedanz zu empfangen; und

das zweite Mikrocontroller-Modul (26) dazu konfiguriert ist, basierend auf den Werten der Zielspannung und der ermittelten Batterieimpedanz ein Steuersignal an das Leistungsverstärkermodul (22) zu senden, um durch das Steuersignal das LeistungsverstärkerModul (22) zur Ausgabe der Zielleistung zu steuern, wobei die Zielleistung zur Anpassung der Zielspannung dient, die Zielspannung eine Ausgangsspannung eines Gleichstromimpedanzwandlers (14) in der Energieempfangseinrichtung (102) ist und der Eingangswiderstand des Gleichstromimpedanzwandlers (14) einen voreingestellten Konstantwert aufweist.

9. Die Energieübertragungsvorrichtung gemäß Anspruch 8, wobei die Zielleistung ein Verhältnis des Quadrats der Zielspannung zum Produkt aus der ermittelten Batterieimpedanz und dem gesamten Antennenwirkungsgrad ist.

10. Die Energieübertragungsvorrichtung gemäß einem der Ansprüche 8 bis 9, wobei das von der Energieempfangsvorrichtung und der Energieabgabevorrichtung zur Übertragung von Hochfrequenzenergie verwendete Betriebsfrequenzband 6,78 MHz und/oder 13,56 MHz umfasst.

11. Ein Energieübertragungsverfahren, das auf eine Energieempfangsvorrichtung (102) angewendet wird, wobei die Energieempfangsvorrichtung (102) ein Batterie- und Schutzschaltkreis-Modul (16), ein erstes Mikrocontroller-Modul (15), ein Impedanzwandlermodul (14) und ein erstes Kommunikationsmodul (17) umfasst, und wobei das Verfahren Folgendes umfasst:

Ausführen durch das erste Mikrocontroller-Modul (15) der Spannungsüberwachung an dem Batterie- und Schutzschaltungsmodul (16), um eine Batteriespannung zu erhalten, Bestimmung des Batteriewiderstands basierend auf der Batteriespannung sowie Senden eines Steuersignals an das Impedanzumwandlungsmodul (14) auf Grundlage eines voreingestellten Konstantwerts und des Batteriewiderstands, wobei der Konstantwert den Eingangsimpedanzwert des Impedanzumwandlungsmoduls (14) repräsentiert;

Ausgeben einer Zielspannung durch das Impedanzumwandlungsmodul (14) an das Batterie- und Schutzschaltungsmodul (16) basierend auf dem Steuersignal, wobei die Zielspannung eine Ausgangsspannung des Impedanzumwandlungsmoduls (14) ist, die durch Anpassen der Eingangsspannung des Impedanzumwandlungsmoduls (14) basierend auf dem Steuersignal erhalten wird;

Empfangen der vom Impedanzumwandlungsmodul ausgegebenen Zielspannung durch das Batterie- und Schutzschaltungsmodul (16); und

Senden der Werte der Zielspannung und des Batteriewiderstands durch das erste Kommunikationsmodul (17) an ein zweites Kommunikationsmodul (26) einer Sendevorrichtung, wobei die Werte der Zielspannung und des Batteriewiderstands dazu dienen, dass die Sendevorrichtung die Zielleistung auf Basis der Zielspannung und des detektierten Batteriewiderstands berechnen und die Zielspannung anhand der Zielleistung anpassen kann;

wobei das Verfahren ferner umfasst:

Erkennen des Ladezustands des Batterie- und Schutzschaltungsmoduls (16) durch das erste Mikrocontroller-Modul (15), um zu bestimmen, ob das Laden des Batterie- und Schutzschaltungsmoduls (16) abgeschlossen ist;

und Durchführung der Spannungsüberwachung am Batterie- und Schutzschaltungsmodul (16) nach jeweils einer Verzögerungsschwelle, falls das Laden des Batterie- und Schutzschaltungsmoduls (16) nicht abgeschlossen ist, um die ermittelte Batteriespannung zu erhalten; und

Stoppen des Empfangs der vom Impedanzumwandlungsmodul (14) ausgegebenen Zielspannung durch das Batterie- und Schutzschaltungsmodul (16), wenn das Laden des Batterie- und Schutzschaltungsmoduls (16) abgeschlossen ist;

Bestimmen durch das erste Mikrocontroller-Modul (15), ob die ermittelte Batteriespannung der maximalen Spannung der Batterie entspricht; und

Bestimmen des ermittelten Batteriewiderstands durch das erste Mikrocontroller-Modul (15) basierend auf der ermittelten Batteriespannung, wenn die ermittelte Batteriespannung der maximalen Batteriespannung entspricht, sowie erneute Überprüfung des Ladezustands des Batterie- und Schutzschaltungsmoduls (16).

12. Das Leistungsübertragungsverfahren nach Anspruch 11, wobei das Ausgeben einer Zielspannung an das Batterie- und Schutzschaltungsmodul basierend auf dem Steuersignal Folgendes umfasst:

passe einen Tastgrad des Steuersignals basierend auf einem voreingestellten konstanten Wert und dem Batterieimpedanz an, wobei der Tastgrad das Verhältnis der Hochpegeldauer des Steuersignals in einem Zyklus zu einem Zyklus ist; und

wenn das Impedanzwandlermodul die Zielspannung ausgibt, liegt die Eingangsimpedanz des Impedanzwandlermoduls beim voreingestellten konstanten Wert.

13. Das Leistungsübertragungsverfahren gemäß Anspruch 11, wobei die Zielleistung das Verhältnis des Quadrats der Zielspannung zum Produkt der erkannten Batterieimpedanz und der gesamten Antennenwirkungsgrad ist.

**Revendications**

1. Un appareil récepteur d'énergie (102), comprenant : un module batterie et circuit de protection (16), un premier module microcontrôleur (15), un module de transformation d'impédance (14), et un premier module de communication (17), dans lequel

le premier module microcontrôleur (15) est configuré pour effectuer une détection de tension sur le module batterie et circuit de protection (16) afin d'obtenir une tension de batterie détectée, déterminer l'impédance de la batterie en fonction de la tension de batterie détectée, et envoyer un signal de commande au module de transformation d'impédance (14) en fonction d'une valeur constante prédéfinie et de l'impédance de la batterie, la valeur constante représentant la valeur de l'impédance d'entrée du module de transformation d'impédance ;

le module de transformation d'impédance (14) est configuré pour délivrer une tension cible au module batterie et circuit de protection (16) en fonction du signal de commande, la tension cible étant la tension de sortie du module de transformation d'impédance (14), obtenue par l'ajustement de la tension d'entrée du module de transformation d'impédance (14) sur la base du signal de commande ;

le module batterie et circuit de protection (16) est en outre configuré pour recevoir la tension cible délivrée par le module de transformation d'impédance (14) ; et

le premier module de communication (17) est configuré pour transmettre les valeurs de la tension cible et de l'impédance de la batterie à un second module de communication (26) d'un appareil d'émission d'énergie (101), les valeurs de la tension cible et de l'impédance de la batterie étant conçues pour permettre à l'appareil d'émission d'énergie de calculer la puissance cible sur la base de la tension cible et de l'impédance de la batterie détectée, et d'ajuster la tension cible en fonction de la puissance cible ;

dans lequel

le premier module microcontrôleur (15) est spécifiquement configuré pour détecter l'état de charge du module batterie et circuit de protection (16), afin de déterminer si la charge du module batterie et circuit de protection (16) est terminée ; et effectuer une détection de tension sur le module batterie et circuit de protection (16) à chaque seuil de temporisation si la charge du module batterie et circuit de protection (16) n'est pas terminée, afin d'obtenir la tension de batterie détectée ; et

le module batterie et circuit de protection (16) est en outre configuré, si la charge du module batterie et circuit de protection (16) est terminée, pour cesser de recevoir la tension cible délivrée par le module de transformation d'impédance (14) ; et

dans lequel

le premier module microcontrôleur (15) est en outre configuré pour déterminer si la tension de batterie détectée est égale à la tension maximale de la batterie ;

le premier module microcontrôleur (15) est en outre configuré pour déterminer l'impédance de la batterie détectée sur la base de la tension de batterie détectée si celle-ci est égale à la tension maximale de la batterie, et pour détecter à nouveau l'état de charge de la batterie ainsi que le module de circuit de protection (16).

2. L'appareil de réception d'énergie selon la revendication 1, dans lequel

le premier module microcontrôleur est spécifiquement configuré pour ajuster un cycle de service du signal de commande en fonction d'une valeur constante prédéfinie et de l'impédance de la batterie, le cycle de service étant le rapport de la durée de niveau haut du signal de commande sur un cycle à la durée totale dudit cycle ; et

lorsque le module de transformation d'impédance délivre la tension cible, l'impédance d'entrée dudit module de transformation d'impédance est à la valeur constante prédéfinie.

3. L'appareil de réception d'énergie selon la revendication 1, dans lequel la puissance cible est le rapport du carré de la tension cible au produit de l'impédance de batterie détectée et du rendement total de l'antenne.

4. L'appareil de réception d'énergie selon la revendication 3, dans lequel le premier module de communication est spécifiquement configuré pour transmettre la tension cible et l'impédance de batterie détectée à l'appareil d'émission d'énergie, afin de permettre à ce dernier de calculer la puissance cible d'après la tension cible, l'impédance de batterie détectée et le rendement total de l'antenne, et d'ajuster la tension cible en fonction de la puissance cible.

5. L'appareil de réception d'énergie selon la revendication 1, dans lequel le module de transformation d'impédance est un convertisseur d'impédance à courant continu, et ce convertisseur comprend au moins l'un des éléments suivants : un convertisseur inductif primaire à simple extrémité, un convertisseur buck-boost à courant continu et un convertisseur boost-buck à courant continu.

6. L'appareil de réception d'énergie selon la revendication 1, dans lequel le module de batterie et de circuit de protection est en outre configuré pour recevoir la tension cible délivrée par le module de transformation d'impédance ; et pour activer au moins un circuit de protection si la tension cible est supérieure à la tension maximale de la batterie, ledit ou lesdits circuits de protection comprenant au moins une diode transitoire de tension.

7. L'appareil de réception d'énergie selon la revendication 1, dans lequel

le premier module microcontrôleur est en outre conçu pour déterminer, si la tension de batterie détectée est inférieure à la tension maximale de la batterie, si ladite tension détectée se situe dans une plage de seuil de réception, un seuil de réception représentant le degré de déviation de la tension cible ;

le premier module microcontrôleur est en outre configuré pour détecter à nouveau l'état de charge du module batterie et circuit de protection si la tension de batterie détectée se situe dans la plage de seuil de réception, afin de déterminer si la charge du module batterie et circuit de protection est terminée ; et

le premier module microcontrôleur est en outre configuré pour déterminer l'impédance de la batterie détectée sur la base de la tension de batterie mesurée si la tension de batterie mesurée ne se situe pas dans la plage de seuil de réception, et de détecter à nouveau l'état de charge du module batterie et circuit de protection.

8. Un appareil de transmission d'énergie (100) comprenant un appareil de réception d'énergie (102) selon l'une des revendications 1 à 7 et un appareil d'émission d'énergie (101), l'appareil d'émission d'énergie (101) comprenant : un second module de communication (26), un second module microcontrôleur (25), et un module amplificateur de puissance (22), dans lequel

le second module de communication (26) est configuré pour recevoir les valeurs de la tension cible et de l'impédance de batterie détectée envoyées par l'appareil de réception d'énergie (102) ; et
le second module microcontrôleur (26) est configuré pour envoyer un signal de commande au module amplificateur de puissance (22) en fonction des valeurs de la tension cible et de l'impédance de batterie détectée, afin de contrôler, via le signal de commande, le module amplificateur de puissance (22) pour qu'il délivre une puissance cible, la puissance cible servant à ajuster la tension cible, la tension cible étant une tension de sortie d'un convertisseur d'impédance à courant continu (14) de l'appareil de réception d'énergie (102), et l'impédance d'entrée du convertisseur d'impédance à courant continu (14) étant une valeur constante prédéfinie.

9. L'appareil de transmission d'énergie selon la revendication 8, dans lequel la puissance cible correspond au rapport du carré de la tension cible sur le produit de l'impédance de batterie détectée et du rendement total de l'antenne.

10. L'appareil de transmission d'énergie selon l'une quelconque des revendications 8 à 9, dans lequel la bande de fréquences utilisée par l'appareil de réception d'énergie et l'appareil d'émission d'énergie pour transmettre l'énergie radiofréquence comprend 6,78 MHz et/ou 13,56 MHz.

11. Un procédé de transmission d'énergie appliqué à un appareil de réception d'énergie (102), dans lequel l'appareil de réception d'énergie (102) comprend un module batterie et circuit de protection (16), un premier module microcontrôleur (15), un module de transformation d'impédance (14), et un premier module de communication (17), et dans lequel le procédé comprend :

réaliser, par le premier module microcontrôleur (15), la détection de tension sur le module de batterie et de circuit de protection (16) afin d'obtenir une tension de batterie, déterminer l'impédance de la batterie en fonction de la tension de batterie, et envoyer un signal de commande au module de transformation d'impédance (14) sur la base d'une valeur constante prédéfinie et de l'impédance de la batterie, ladite valeur constante représentant une valeur d'impédance d'entrée du module de transformation d'impédance (14) ;
émettre, par le module de transformation d'impédance (14), une tension cible vers le module de batterie et de circuit de protection (16) sur la base du signal de commande, la tension cible étant une tension de sortie du module de transformation d'impédance (14) obtenue en ajustant une tension d'entrée du module de transformation d'impédance (14) selon le signal de commande ;
obtenir, par le module de batterie et de circuit de protection (16), la tension cible émise par le module de transformation d'impédance ; et
envoyer, par le premier module de communication (17), les valeurs de la tension cible et de l'impédance de la batterie à un second module de communication (26) d'un dispositif d'émission d'énergie, lesdites valeurs permettant au dispositif d'émission d'énergie de calculer la puissance cible à partir de la tension cible et de l'impédance de batterie détectée, et d'ajuster la tension cible selon la puissance cible ; et où la méthode comprend en outre :

détecter, par le premier module microcontrôleur (15), l'état de charge du module de batterie et de circuit de protection (16), afin de déterminer si la charge du module de batterie et de circuit de protection (16) est terminée ; et effectuer une détection de tension sur le module de batterie et de circuit de protection (16) à chaque seuil de délai si la charge du module de batterie et de circuit de protection (16) n'est pas achevée, pour obtenir la tension de batterie détectée ; et
arrêter, par le module de batterie et de circuit de protection (16), si la charge du module de batterie et de circuit de protection (16) est achevée, la réception de la tension cible émise par le module de transformation d'impédance (14) ;
déterminer, par le premier module microcontrôleur (15), si la tension de batterie détectée est égale à la tension maximale de la batterie ; et
déterminer, par le premier module microcontrôleur (15), l'impédance de batterie détectée en fonction de la tension de batterie détectée si cette dernière est égale à la tension maximale de la batterie, et détecter à nouveau l'état de charge du module de batterie et de circuit de protection (16).

12. Le procédé de transmission de puissance selon la revendication 11, dans lequel l'émission d'une tension cible vers le module de batterie et de circuit de protection sur la base du signal de commande comprend :

ajuster un rapport cyclique du signal de commande en fonction d'une valeur constante prédéfinie et de l'impédance de la batterie, le rapport cyclique étant le ratio entre la durée au niveau haut du signal de commande durant un cycle et la durée totale de ce cycle ; et

lorsque le module de transformation d'impédance délivre la tension cible, l'impédance d'entrée du module de transformation d'impédance est à la valeur constante prédéfinie.

13. Procédé de transmission d'énergie selon la revendication 11, dans lequel la puissance cible est le ratio entre le carré de la tension cible et le produit de l'impédance de la batterie détectée et de l'efficacité totale de l'antenne.

Power transmission apparatus 100

Output power 105

FIG. 1

FIG. 2

FIG. 3

Power transmission apparatus 100

FIG. 4

EP 4 358 363 B1

Impedance transformation module 14

Input
impedance

Battery
impedance

FIG. 5

Impedance transformation module 14

Input
impedance

Battery
impedance

FIG. 6

Impedance transformation module 14

FIG. 7

Transmit antenna 24                    Receive antenna 11

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015171820 A1
- US 2016352139 A1